# EUROPEAN PATENT APPLICATION

(11) **EP 4 752 858 A1**
(43) Date of publication of application: **03.06.2026**
(21) Application number: 25219178.8
(22) Date of filing: 27.11.2025
(51) Int. Cl.: G07C 5/08, B60W 40/00, G06N 3/088, G06N 7/01, G06Q 10/0635, G06Q 40/08, G07C 5/00

(54) **SYSTEMS AND METHODS FOR ASSESSING DRIVING RISK**

(30) Priority: 29.11.2024 US 202463726387 P
(71) Applicant: GEOTAB Inc., Oakville, ON L6H 7V2 (CA)
(72) Inventor: Chan, Ian Weng, Toronto, M5G 1X6 (CA); Badescu, Andrei Lucian, Toronto, M5G 1X6 (CA); Lin, Xiaodong, Toronto, M5G 1X6 (CA)
(74) Representative: Fleuchaus & Gallo Partnerschaft mbB

(57) **Abstract**

Disclosed are systems and methods for assessing driving risk in the field of vehicle telematics. The disclosed technology addresses the challenge of evaluating risk from raw, irregularly sampled telematics time series. The system comprises at least one data storage for telematics data and at least one processor operable to determine velocity vectors, longitudinal acceleration, and lateral acceleration from geospatial data, identify trip subintervals with non-zero speed events, and detect anomalous trip events using a stochastic model, such as a continuous-time hidden Markov model. The processor flags events exceeding a threshold as anomalous. A trip risk score is calculated based on the proportion of anomalous events. Principal uses include insurance premium adjustment, fleet management, and driver coaching. The disclosed technology further encompasses processes and non-transitory computer-readable media for implementing these functionalities.

## Description

### TECHNICAL FIELD

The present disclosure generally relates to telematics data. More specifically, the present disclosure relates to the use of telematics data to assess driving risk.

### BACKGROUND

Today, modern vehicles rely on onboard telematics devices and connected computing systems (e.g., one or more processors and memory) to capture, process, and transmit electronic data associated with vehicle operations. As will be appreciated, such systems collect a variety of metrics- including geospatial coordinates, speed profiles, acceleration vectors, engine performance parameters, and diagnostic codes- which may collectively be referred to as "telematics data".

Telematics data may be employed for a multitude of applications. For example, telematics data may be used for maintenance planning (e.g., predicting service intervals based on engine diagnostics), route optimization (e.g., selecting fuel-efficient paths), fuel management (e.g., monitoring consumption patterns), and driver coaching (e.g., providing feedback on driving habits) to deliver actionable insights for fleet operators and vehicle manufacturers. In the insurance sector, usage-based programs utilize summarized telematics signals- such as counts of harsh braking events, instances of speeding, and duration of idling- to classify driver risk and adjust insurance premiums accordingly.

Conventional risk assessment approaches typically condense high-frequency telematics into aggregated statistics and apply fixed event thresholds to flag unsafe driving. However, these techniques may overlook temporal correlations, require manual threshold tuning, and assume consistent sampling intervals, which can reduce their ability to effectively analyze data streams characterized by irregular reporting or truncated logging. As a result, such approaches may fail to capture nuanced patterns in driver behavior over the course of a trip.

More sophisticated strategies have also been introduced to exploit raw telematics data sequences for such purposes. For example, neural network architectures, and speed-acceleration heatmaps have been applied to analyze sequential telematics data. However, these solutions often demand extensive feature engineering, struggle with variable trip lengths, and lack robust mechanisms for identifying unusual driving patterns in the absence of labeled accident data. Accordingly, there remains room for improvement in directly leveraging raw, irregularly sampled telematics time series.

A need therefore exists for improved systems and methods for assessing driving risk that may directly leverage raw telematics time series data, accommodate variable trip durations, and perform unsupervised anomaly detection to generate dynamic assessments of driving risk.

### SUMMARY

In one aspect, the present disclosure relates to a system for assessing driving risk, the system comprising: at least one data storage operable to store telematics data, the telematics data originating from a plurality of telematics devices installed in a plurality of vehicles and comprising at least geospatial data; and at least one processor in communication with the at least one data storage, the at least one processor operable to: determine, using the geospatial data, a velocity vector, a longitudinal acceleration, and a lateral acceleration for at least one vehicle of the plurality of vehicles during a trip; identify, for each trip, at least one trip subinterval, each trip subinterval comprising a non-zero speed event having the velocity vector, the longitudinal acceleration, and the lateral acceleration associated therewith; identify, for each trip subinterval, an anomalous trip event by: identifying a plurality of trip events by applying to each trip subinterval a stochastic model, and determining that at least one trip event of the plurality of trip events is anomalous based the at least one trip event exceeding a predetermined threshold; and determine a trip risk score based at least in part on a proportion of anomalous trip events.

According to an embodiment, the geospatial data comprises irregularly reported geospatial data.

According to an embodiment, the at least one processor is operable to determine the longitudinal acceleration and the lateral acceleration based on a plurality of consecutive velocity vectors.

According to an embodiment, the stochastic model comprises a continuous-time hidden Markov model.

According to an embodiment, the at least one processor is operable to identify the anomalous trip event by: determining, for each observation dimension of the continuous-time hidden Markov model, a plurality of forecast pseudo-residuals conditioned on prior observations under the continuous-time hidden Markov model; transforming the forecast pseudo-residuals to a normal scale; and identifying the anomalous trip event when a magnitude of a transformed pseudo-residual exceeds the predetermined threshold.

According to an embodiment, the at least one processor is operable to determine the trip risk score based at least in part on a proportion of flagged outliers across a velocity dimension, a longitudinal acceleration dimension, a lateral acceleration dimension, or a combination thereof.

According to an embodiment, the at least one processor is operable to determine the trip risk score by weighting the proportion of anomalous trip events by a duration of the trip subinterval, by a number of events of the plurality of trip events, or a combination thereof.

According to an embodiment, the stochastic model comprises an individual-specific stochastic model for detecting anomalous trip events relative to a typical driving behavior of a specific driver.

According to an embodiment, the stochastic model comprises a pooled stochastic model for detecting anomalous trip events relative to a typical driving behavior of a pool of drivers.

In another aspect, the present disclosure relates to a method for assessing driving risk, the method comprising operating at least one processor to: receive telematics data originating from a plurality of telematics devices installed in a plurality of vehicles, the telematics data comprising at least geospatial data; determine, using the geospatial data, a velocity vector, a longitudinal acceleration, and a lateral acceleration for at least one vehicle of the plurality of vehicles during a trip; identify, for each trip, at least one trip subinterval, each trip subinterval comprising a non-zero speed event having the velocity vector, the longitudinal acceleration, and the lateral acceleration associated therewith; identify, for each trip subinterval, an anomalous trip event by: identifying a plurality of trip events by applying to each trip subinterval a stochastic model, and determining that at least one trip event of the plurality of trip events is anomalous based on the at least one trip event exceeding a predetermined threshold; and determining a trip risk score based at least in part on a proportion of anomalous trip events.

According to an embodiment, the geospatial data comprises irregularly reported geospatial data.

According to an embodiment, the determining of the longitudinal acceleration and the lateral acceleration is based on a plurality of consecutive velocity vectors.

According to an embodiment, the stochastic model comprises a continuous-time hidden Markov model.

According to an embodiment, the identifying of the anomalous trip event comprises operating the at least one processor to: determine, for each observation dimension of the continuous-time hidden Markov model, a plurality of forecast pseudo-residuals conditioned on prior observations under the continuous-time hidden Markov model; transform the forecast pseudo-residuals to a normal scale; and identify the anomalous trip event when a magnitude of a transformed pseudo-residual exceeds the predetermined threshold.

According to an embodiment, the determining of the trip risk score is based at least in part on a proportion of flagged outliers across a velocity dimension, a longitudinal acceleration dimension, a lateral acceleration dimension, or a combination thereof.

According to an embodiment, the determining of the trip risk score comprises operating the at least one processor to weight the proportion of anomalous trip events by a duration of the trip subinterval, by a number of events of the plurality of trip events, or a combination thereof.

According to an embodiment, the stochastic model comprises an individual-specific stochastic model for detecting anomalous trip events relative to a typical driving behavior of a specific driver.

According to an embodiment, the stochastic model comprises a pooled stochastic model for detecting anomalous trip events relative to a typical driving behavior of a pool of drivers.

In another aspect, the present disclosure relates to a non-transitory computer-readable medium having instructions stored thereon executable by at least one processor to implement a method for assessing driving risk, the method comprising operating at least one processor to: receive telematics data originating from a plurality of telematics devices installed in a plurality of vehicles, the telematics data comprising at least geospatial data; determine, using the geospatial data, a velocity vector, a longitudinal acceleration, and a lateral acceleration for at least one vehicle of the plurality of vehicles during a trip; identify, for each trip, at least one trip subinterval, each trip subinterval comprising a non-zero speed event having the velocity vector, the longitudinal acceleration, and the lateral acceleration associated therewith; identify, for each trip subinterval, an anomalous trip event by: identifying a plurality of trip events by applying to each trip subinterval a stochastic model, and determining that at least one trip event of the plurality of trip events is anomalous based on the at least one trip event exceeding a predetermined threshold; and determining a trip risk score based at least in part on a proportion of anomalous trip events.

Other aspects and features of the systems and methods of the present disclosure will become apparent to those ordinarily skilled in the art upon review of the following description of specific embodiments.

### BRIEF DESCRIPTION OF THE DRAWINGS

These and other features of the present disclosure will become more apparent in the following detailed description in which reference is made to the appended drawings. The appended drawings illustrate one or more embodiments of the present disclosure by way of example only and are not to be construed as limiting the scope of the present disclosure.
FIG. 1 is a block diagram of various components interacting with an example fleet management system according to an embodiment of the present disclosure.
FIG. 2 is a block diagram of an example fleet management system interacting with an example telematics device and an example vehicle, according to an embodiment of the present disclosure.
FIG. 3 is a block diagram of an example computing device interacting with an example fleet management system, according to an embodiment of the present disclosure.
FIG. 4 is a flowchart of an example method for assessing driving risk, according to an embodiment of the present disclosure.

### DETAILED DESCRIPTION

Modern vehicles utilize onboard telematics devices and connected computing systems to capture, process, and transmit electronic data related to vehicle operations. This telematics data includes metrics such as geospatial coordinates, speed profiles, acceleration vectors, engine performance, and diagnostic codes, and may be obtained via embedded or remote devices.

Telematics data supports various applications, including maintenance planning, route optimization, fuel management, and driver coaching. In insurance, usage-based programs use summarized telematics signals-such as harsh braking counts and speeding instances-to classify driver risk and adjust premiums.

Conventional risk assessment methods aggregate high-frequency telematics data and apply fixed thresholds to identify unsafe driving, but these approaches may miss temporal patterns, require manual tuning, and assume regular sampling intervals, limiting their effectiveness with irregular or truncated data streams. Other conventional techniques, such as neural networks, and speed-acceleration heatmaps, have been used to analyze sequential telematics data. However, these often require extensive feature engineering, struggle with variable trip lengths, and lack robust mechanisms for detecting unusual driving patterns without labeled accident data.

It is therefore an object of the present disclosure to provide advantageous systems and methods for assessing driving risk.

For example, in some embodiments, the systems and methods of the present disclosure may be capable of directly leveraging raw, irregularly sampled telematics data. This enables the analysis of nuanced temporal patterns in driver behavior that may be missed by conventional aggregation methods, as described herein.

Further, in some embodiments, the systems and methods of the present disclosure may be capable of accommodating variable trip durations and does not require manual threshold tuning, thereby streamlining the risk assessment process.

Further still, in some embodiments, the systems and methods of the present disclosure may employ unsupervised anomaly detection (e.g., a stochastic model such as a continuous-time hidden Markov model) to thereby dynamically identify unusual driving patterns without the need for labeled accident data or extensive feature engineering.

Such advantages may facilitate more accurate, timely, and individualized assessments of driving risk, supporting enhanced decision-making for insurance, fleet management, and driver feedback applications.

Additional advantages will be discussed below and will be readily apparent to those of ordinary skill in the art upon reading the present disclosure.

Reference will now be made in detail to example embodiments of the disclosure, wherein numerals refer to like components, examples of which are illustrated in the accompanying drawings that further show example embodiments, without limitation.

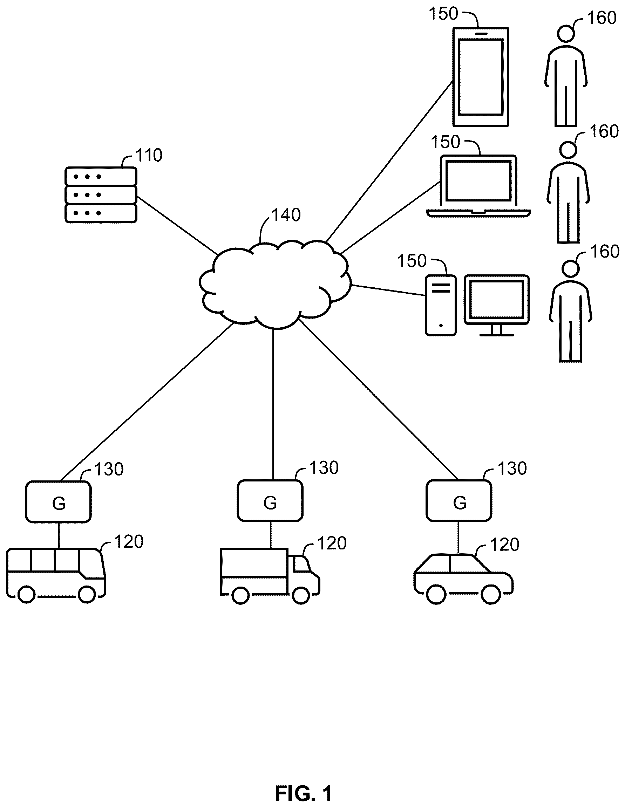

Referring now to FIG. 1, there is shown an example of a fleet management system 110 for managing a plurality of assets equipped with a plurality of telematics devices 130. Each of the telematics devices 130 is capable of collecting various data from the vehicles 120 (i.e., telematics data) and sharing the telematics data with the fleet management system 110. The fleet management system 110 may be remotely located from the telematics devices 130 and the vehicles 120.

The vehicles 120 may include any type of vehicle. For example, the vehicles 120 may include motor vehicles such as cars, trucks (e.g., pickup trucks, heavy-duty trucks such as class-8 vehicles, etc.), motorcycles, industrial vehicles (e.g., buses), and the like. Each motor vehicle may be a gas, diesel, electric, hybrid, and/or alternative fuel vehicle. Further, the vehicles 120 may include vehicles such as railed vehicles (e.g., trains, trams, and streetcars), watercraft (e.g., ships and recreational pleasure craft), aircraft (e.g., airplanes and helicopters), spacecraft, and the like. Each of the vehicles 120 may be equipped with one of the telematics devices 130.

Further, it is noted that, while only three vehicles 120 having three telematics devices 130 are shown in the illustrated example, it will be appreciated that there may be any number of vehicles 120 and telematics devices 130. For example, the fleet management system 110 may manage hundreds, thousands, or even millions of vehicles 120 and telematics devices 130.

In some embodiments, the telematics devices 130 may be standalone devices that are removably installed in the vehicles 120 (e.g., aftermarket telematics devices). In other embodiments, the telematics devices 130 may be integrated components of the vehicles 120 (e.g., pre-installed by an OEM). As described herein, the telematics devices 130 may collect various telematics data and share the telematics data with the fleet management system 110. The telematics data may include any information, parameters, attributes, characteristics, and/or features associated with the vehicles 120. For example, the vehicle data may include, but is not limited to, location data, speed data, acceleration data, fluid level data (e.g., oil, coolant, and washer fluid), energy data (e.g., battery and/or fuel level), engine data, brake data, transmission data, odometer data, vehicle identifying data, error/diagnostic data, tire pressure data, seatbelt data, airbag data, or a combination thereof. In some embodiments, the telematics data may include information relating to the telematics devices 130 and/or other devices associated with or connected to the telematics devices 130. Regardless, it should be appreciated the telematics data is a form of electronic data that requires a computer (e.g., a processor such as those described herein) to transmit, receive, interpret, process, and/or store.

Once received, the fleet management system 110 may process the telematics data obtained from the telematics devices 130 to provide various analysis, predictions, reporting, etc. In some embodiments, the fleet management system 110 may process the telematics data to provide additional information about the vehicles 120, such as, but not limited to, trip distances and times, idling times, harsh braking and driving, usage rates, fuel economy, and the like. Various data analytics may be implemented to process the telematics data. The telematics data may then be used to manage various aspects of the vehicles 120, such as route planning, vehicle maintenance, driver compliance, asset utilization, fuel management, etc., which, in turn, may improve productivity, efficiency, safety, and/or sustainability of the vehicles 120.

A plurality of computing devices 150 may provide access to the fleet management system 110 to a plurality of users 160. The users 160 may use computing devices 150 to access or retrieve various telematics data collected and/or processed by the fleet management system 110 to manage and track the vehicles 120. As will be appreciated, the computing devices 150 may be any suitable computing devices. For example, the computing devices 150 may be any type of computers such as, but not limited to, personal computers, portable computers, wearable computers, workstations, desktops, laptops, smartphones, tablets, smartwatches, personal digital assistants (PDAs), mobile devices, and the like. The computing devices 150 may be remotely located from the fleet management system 110, telematic devices 130, and vehicles 120.

The fleet management system 110, telematics devices 130, and computing devices 150 may communicate through a network 140. The network 140 may comprise a plurality of networks and may be wireless, wired, or a combination thereof. As will be appreciated, the network 140 may employ any suitable communication protocol and may use any suitable communication medium. For example, the network 140 may comprise Wi-Fi^{™} networks, Ethernet networks, Bluetooth^{™} networks, near-field communication (NFC) networks, radio networks, cellular networks, and/or satellite networks. The network 140 may be public, private, or a combination thereof. For example, the network 140 may comprise local area networks (LANs), wide area networks (WANs), the internet, or a combination thereof. Of course, as will also be appreciated, the network 140 may also facilitate communication with other devices and/or systems that are not shown.

Further, the fleet management system 110 may be implemented using one or more computers. For example, the fleet management system 110 may be implements using one or more computer servers. The servers may be distributed across a wide geographical area. In some embodiments, the fleet management system 110 may be implemented using a cloud computing platform, such as Google Cloud Platform^{™} and Amazon Web Services^{™}. In other embodiments, the fleet management system 110 may be implemented using one or more dedicated computer servers. In a further embodiment, the fleet management system 110 may be implemented using a combination of a cloud computing platform and one or more dedicated computer servers.

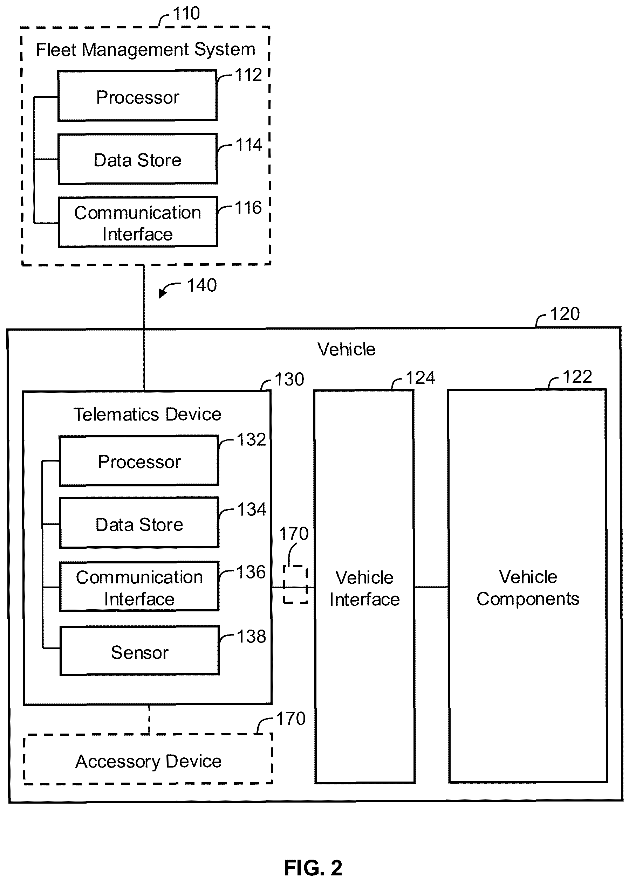

Referring now to FIG. 2, there is illustrated the fleet management system 110 in communication with one of the telematics devices 130 that is installed in one of the vehicles 120. As shown, the fleet management system 110 may include a processor 112, a data storage 114, and a communication interface 116, each of which may communicate with each other. The processor 112, the data storage 114, and the communication interface 116 may be combined into fewer components, divided into additional subcomponents, or a combination thereof. The components and/or subcomponents may not necessarily be distributed in proximity to one another and may instead be distributed across a wide geographical area.

The processor 112 may control the operation of the fleet management system 110. As will be appreciated, the processor 112 may be implemented using one or more suitable processing devices or systems. For example, the processor 112 may be implemented using central processing units (CPUs), graphics processing units (GPUs), field programmable gate arrays (FPGAs), application specific integrated circuits (ASICs), digital signal processors (DSPs), neural processing units (NPUs), quantum processing units (QPUs), microprocessors, controllers, and the like. The processor 112 may execute various instructions, programs, software, or a combination thereof stored on the data storage 114 to implement various methods described herein. For example, the processor 112 may process various telematics data collected by the fleet management system 110 from the telematics devices 130.

Various data for the fleet management system 110 may be stored on the data storage 114. The data storage 114 may be implemented using one or more suitable data storage devices or systems such as random-access memory (RAM), read only memory (ROM), flash memory, hard disk drives (HDDs), solid-state drives (SSDs), magnetic tape drives, optical disc drives, memory cards, and the like. The data storage 114 may include volatile memory, nonvolatile memory, or a combination thereof. Further, the data storage 114 may comprise non-transitory computer readable media. The data storage 114 may store various instructions, programs, and/or software that are executable by the processor 112 to implement various methods described herein. The data storage 114 may store various telematics data collected from the telematics devices 130 and/or processed by the processor 112.

The communication interface 116 may enable communication between the fleet management system 110 and other devices and/or systems, such as the telematics devices 130. The communication interface 116 may be implemented using any suitable communications devices and/or systems. For example, the communication interface 116 may comprise one or more various physical connectors, ports, or terminals such as universal serial bus (USB), ethernet, Thunderbolt, Firewire, serial advanced technology attachment (SATA), peripheral component interconnect (PCI), high-definition multimedia interface (HDMI), DisplayPort, and the like. As another example, the communication interface 116 may comprise one or more wireless interface components to connect to wireless networks such as Wi-Fi^{™}, Bluetooth^{™}, NFC, cellular, satellite, and the like. The communication interface 116 may enable various inputs and outputs to be received at and sent from the fleet management system 110. For example, the communication interface 116 may be used to telematics data from the telematics devices 130.

The telematics devices 130 also may include a processor 134, a data storage 134, and a communication interface 136. The telematics devices 130 may also comprise a sensor 138. Each of the components of the telematics devices 130 may communicate with each other and may be combined into fewer components or divided into additional subcomponents.

The processor 132 may control the operation of the telematics device 130. The processor 132 may be implemented using any suitable processing devices or systems, such as those described above in relation to the processor 112 of the fleet management system 110. The processor 132 may execute various instructions, programs, software, or a combination thereof stored on the data storage 134 to implement various methods described herein. For example, the processor 132 may process various telematics data obtained from vehicle components 122 and/or the sensor 138.

The data storage 134 may store various data for the telematics device 130. The data storage 134 may be any suitable data storage device or system, such as those described above in relation to the data storage 114 of the fleet management system 110. The data storage 134 may store various instructions, programs, software, or a combination thereof executable by the processor 132 to implement various methods described herein. As well, the data storage 134 may store various telematics data obtained from the vehicle components 122 and/or the sensor 138.

The communication interface 136 may enable communication between the telematics devices 130 and other devices or systems, such as the fleet management system 110 and the vehicle components 122. The communication interface 136 may comprise any suitable communication devices or systems, such as those described above in relation to the communication interface 116 of the fleet management system 110. The communication interface 136 may enable various inputs and outputs to be received at and sent from the telematics devices 130. For example, the communication interface 136 may be used to collect vehicle data from the vehicle components 122 and/or sensor 138, to send vehicle data to the fleet management system 110, etc.

The sensor 138 may detect and/or measure various environmental events, changes, etc. The sensor 138 may include any suitable sensing devices or systems, such as, but not limited to, location sensors, velocity sensors, acceleration sensors, orientation sensors, vibration sensors, proximity sensors, temperature sensors, humidity sensors, pressure sensors, optical sensors, audio sensors, and combinations thereof. When the telematics device 130 is installed in the vehicle 120, the sensor 138 may be used to collect telematics data that may not be obtainable from the vehicle components 122. For example, the sensor 138 may include a satellite navigation device such as a global positioning system (GPS) receiver that may measure the location of the vehicle 120. In some embodiments, the sensor 138 may comprise accelerometers, gyroscopes, magnetometers, inertial measurement units (IMUs), or the like that may measure the acceleration and/or orientation of the vehicle 120.

In some embodiments, the telematics devices 130 may operate in conjunction with one or more accessory devices 170 that are in communication therewith. The accessory devices 170 may include one or more expansion devices that may provide additional functionality to the telematics devices 130. For example, the accessory devices 170 may provide additional processing storage, communication, and/or sensing functionality through one or more additional processors, data storages, communication interfaces, and/or sensors (not pictured). The accessory devices 170 may also include adaptor devices that facilitate communication between the communication interface 136 and one or more vehicle interfaces 124, such as a cable harness. The one or more accessory devices 170 may be installed in the vehicle 120 along with the telematics devices 130.

As described herein, the telematics device 130 may be installed within the vehicle 120 removably or integrally. The vehicle 120 may include the vehicle components 122 and the one or more vehicle interfaces 124, which, as will be appreciated, may be combined into fewer components or divided into additional subcomponents. In some embodiments, the vehicle components 122 may comprise any subsystems, parts, subcomponents, or combinations thereof of the vehicle 120. For example, the vehicle components 122 may comprise powertrains, engines, transmissions, steering, braking, seating, batteries, doors, suspensions, etc. The telematics device 130 may obtain various telematics data from the vehicle components 122. For example, in some embodiments, the telematics device 130 may communicate with one or more electrical control units (ECUs) that control the vehicle components 122 or one or more internal sensors thereof.

The vehicle interface 124 may facilitate communication between the vehicle components 122 and other devices or systems. As well, the vehicle interface 124 may comprise any suitable communication devices or systems. For example, the vehicle interface 124 may include an on-board diagnostics (OBD-II) port and/or controller area network (CAN) bus port. The vehicle interface 124 may be used by the telematics device 130 to obtain telematics data from the vehicle components 122. For example, the communication interface 136 may be connected to the vehicle interface 124 to communicate with the vehicle components 122. In some embodiments, the one or more accessory devices 170 (e.g., a wire harness) may provide the connection between the communication interface 136 and the vehicle interface 124.

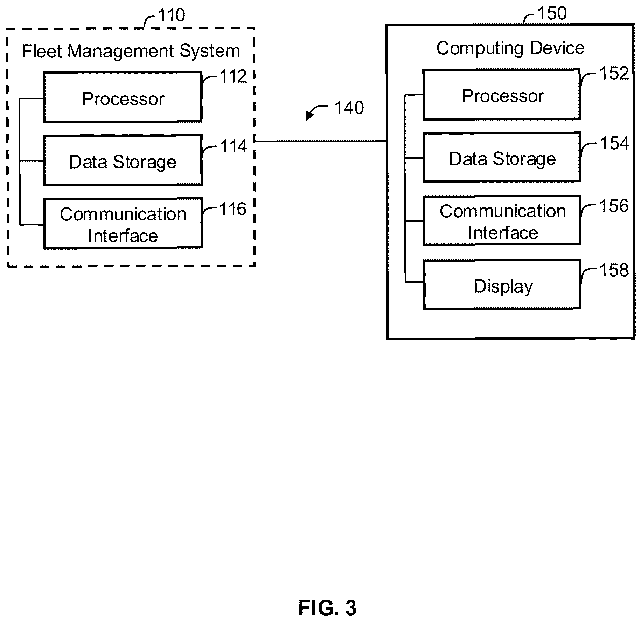

Referring now to FIG. 3, there is shown the fleet management system 110 in communication with the computing devices 150. As shown, the computing device 150 may also include a processor 152, a data storage 153, and a communication interface 156. As well, the computing device 150 may include a display 158. Each of the components of the computing device 150 may be communicate with each other and may be combined into fewer components or divided into additional subcomponents.

The processor 152 may control the operation of the computing device 150. The processor 152 may be implemented using any suitable processing devices or systems, such as those described above in relation to the processor 112 of the fleet management system 110. The processor 152 may execute various instructions, programs, software, or a combination thereof stored on the data storage 154 to implement various methods described herein. For example, the processor 152 may process various telematics data received from the fleet management system 110, the telematics devices 130, or a combination thereof.

The data storage 154 may store various data for the computing device 150. The data storage 150 may be any suitable data storage device or system, such as those described above in relation to the data storage 114 of the fleet management system 110. The data storage 154 may store various instructions, programs, software, or a combination thereof executable by the processor 152 to implement various methods described herein. As well, the data storage 154 may store various telematics data received from the fleet management system 110, the telematics devices 130, or a combination thereof.

The communication interface 156 may enable communication between the computing device 150 and other devices or systems, such as the fleet management system 110. The communication interface 156 may be any suitable communication device or system, such as those described above in relation to the communication interface 116 of the fleet management system 110. The communication interface 156 may enable various inputs and outputs to be received at and sent from the computing device 150. For example, the communication interface 156 may be used to retrieve telematics data the fleet management system 110.

The displays 158 may visually present various data for the computing device 150. The displays 158 may be implemented using any suitable display devices or systems, such as, but not limited to, light-emitting diode (LED) displays, liquid crystal displays (LCD), electroluminescent displays (ELDs), plasma displays, quantum dot displays, cathode ray tube (CRT) displays, and the like. The display 158 may be an integrated component that is integral with the computing device 150 or a standalone device that is removable connected to the computing device 150. The display 158 may display various visual representations of the telematics data.

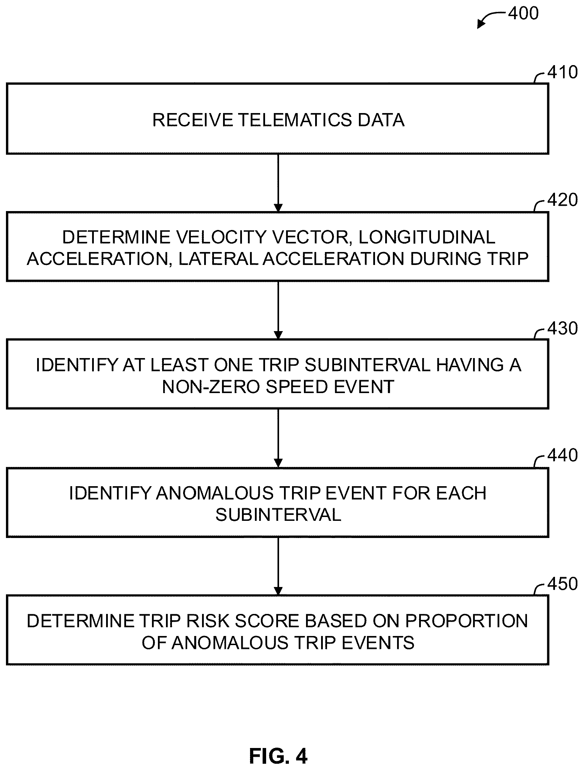

Referring now to FIG. 4, there is shown a flowchart for a method for assessing driving risk (400). As shown, the method 400 comprises operating at least one processor to: receive telematics data originating from a plurality of telematics devices installed in a plurality of vehicles, the telematics data comprising at least geospatial data (410); determine, using the geospatial data, a velocity vector, a longitudinal acceleration, and a lateral acceleration for at least one vehicle of the plurality of vehicles during a trip (420); identify, for each trip, at least one trip subinterval, each trip subinterval comprising a non-zero speed event having the velocity vector, the longitudinal acceleration, and the lateral acceleration associated therewith (430); identify, for each trip subinterval, an anomalous trip event by: identifying a plurality of trip events by applying to each trip subinterval a stochastic model, and determining that at least one trip event of the plurality of trip events is anomalous based on the at least one trip event exceeding a predetermined threshold (440); and determining a trip risk score based at least in part on a proportion of anomalous trip events (450).

The method 400 may be implemented using any suitable combination of hardware and software, such as those described in reference to FIG. 1 to FIG. 3. For example, one or more operations (e.g., operations 410, 420, 430, 440, and/or 450) of the method 400 may be implemented at the fleet management system (e.g., by the processor 112 executing instructions stored on the data storage 114), at the telematics device 130 (e.g., by the processor 132 executing instructions stored on the data storage 134), at the computing devices 150 (e.g., by the processor 152 executing instructions stored on the data storage 154), or a combination thereof.

At operation 410, telematics data originating from a plurality of telematics devices installed in a plurality of vehicles may be received.

In more detail, the telematics data may be obtained from the plurality of vehicles using, for example, one or more of the systems outlined in FIG. 1 to FIG. 3. For example, the telematics device 130 (e.g., the processor 132) may receive telematics data from the sensor 138, vehicle components 122, or a combination thereof. Alternatively, or additionally, the fleet management system 110 (e.g., the processor 112) may receive telematics data from the telematics device 130. Additionally, or alternatively, the computing device 150 (e.g., the processor 152) may receive telematics data from the telematics device 130 and/or the fleet management system 110. Additionally, or alternatively, the telematics device 130, the fleet management system 110, and/or the computing device 150 may receive telematics data from one or more data storages (e.g., one or more of the data storages 114, 134, 154).

As indicated above, in the context of the present disclosure, the telematics data generally comprises at least geospatial data for assessing driver risk. Geospatial data may generally include location data, speed data, acceleration data, the like, or a combination thereof. As indicated herein, the speed data and/or acceleration data may be captured (e.g., via a telematics device130) directly from the vehicle (e.g., using speedometer data) or inferred from changes in location as informed by the location data (e.g., by using changes in location ove3r time to infer speed, acceleration, etc.).

Further, in some embodiments, some embodiments, the telematics data may be preprocessed prior to and/or subsequently to being received. For example, the telematics data may be received in one or more various formats, standards, or protocols. In some cases, it may be beneficial to reformat the telematics data prior to use in the systems and methods of the present disclosure.

In a further embodiment, the telematics data may include datapoints reported at irregular frequencies and/or that correspond to mismatched points in time. For example, the telematics data may include geospatial data that comprises irregularly reported geospatial data. In such embodiments, the telematics data may be curve-logged telematics data, wherein the telematics data is reported at irregular frequencies in order to minimize the amount of data transmitted (e.g., by the telematics device 130). However, as described herein, the systems and methods of the present disclosure may be advantageously adapted to process such irregularly reported data.

In such cases, the telematics data may be interpolated so that the datapoints in each time series correspond to successive and/or equally spaced points in time. As a yet further example, and as will be described herein, the telematics data may be curve-logged telematics data, which may result in a reduced number of received datapoints. In such implementations, the reduced number of datapoints may be interpolated to provide a fulsome dataset.

At operation 420, a velocity vector, a longitudinal acceleration, and a lateral acceleration for at least one vehicle of the plurality of vehicles during a trip may be determined using the geospatial data.

The velocity and the acceleration may be determined using any suitable technique. As indicated herein, velocity and acceleration may be determined from, for example, speedometer data included in the geospatial data or, alternatively, derived from changes in location data included in the geospatial data.

In one example, the at least one processor may be operated to convert raw GPS latitude-longitude coordinates into a Cartesian coordinate system suitable for kinematic calculations, such as Universal Transverse Mercator (UTM), yielding position vectors s(t) = (e(t), n(t)) that denote Easting and Northing at observation time t. Given consecutive positions s(tₗ₋₁) and s(tₗ) observed at times tₗ₋₁ and tₗ, the processor may be operated to determine a velocity vector v(tₗ) as a finite-difference approximation to the time derivative of position by computing the displacement Δs = s(tₗ) - s(tₗ₋₁) and the time interval Δt = tₗ - tₗ₋₁, and then setting v_{raw}(tₗ) = Δs / Δt = (Δe/Δt, Δn/Δt). When recorded vehicle speed spd_{GPS}(tₗ) is available and differs from the magnitude of v_{raw}(tl), the processor may be operated to scale the velocity vector such that its magnitude matches the recorded speed to mitigate GPS and sensor discrepancies, for example by computing the raw magnitude ||v_{raw}(tₗ)|| = sqrt((Δe/Δt)² + (Δn/Δt)²) and setting v(tₗ) = v_{raw}(tₗ) × (spd_{GPS}(tₗ) / max(||v_{raw}(tₗ)||, ε)), where ε is a small positive constant to avoid division by zero. In some implementations, velocity at the start of the trip may be treated as missing because it depends on a prior position not present, and velocity at identical successive timestamps may be treated as undefined due to Δt = 0.

In this example, the processor may then be operated to determine longitudinal and lateral accelerations from consecutive velocity vectors by approximating the time derivative of velocity. For consecutive velocities v(tₗ₋₁) and v(tₗ) observed at times tₗ₋₁ and tₗ, an acceleration vector a(tₗ₋₁) may be determined as a(tₗ₋₁) = (v(tₗ) - v(tₗ₋₁)) / Δt, attributed to the interval [tₗ₋₁, tₗ]. A unit direction of motion u(tₗ₋₁) may be computed as u(tₗ₋₁) = v(tₗ₋₁) / max(||v(tₗ₋₁)||, ε). The longitudinal (i.e., tangential) acceleration aₓ(tₗ₋₁) may then be determined as aₓ(tₗ₋₁) = a(tₗ₋₁)·û(tₗ₋₁), representing acceleration along the direction of travel, and the lateral (i.e., normal) acceleration a_{y}(tₗ₋₁) may be determined as a_{y}(tₗ₋₁) = sqrt(max(||a(tₗ₋₁)||² - aₓ(tₗ₋₁)², 0)), representing curvature-induced acceleration orthogonal to the direction of travel. Because acceleration is derived from two consecutive velocity observations, acceleration values at the first and last observation times of a trip may be treated as missing. Additionally, if the speed magnitude is zero or below a small threshold at a timepoint, the direction of travel may be ill-defined; in such cases the processor may exclude those observations from acceleration computation or carry forward the prior valid direction vector to ensure numerical stability.

Thus, in some embodiments, the determining of the longitudinal acceleration and the lateral acceleration is based on a plurality of consecutive velocity vectors. Of course, other approaches may be used and are contemplated.

In some further embodiments, the at least one processor may be operated to apply quality-control and smoothing operations prior to or after these calculations to improve robustness in the presence of noisy or curve-logged telematics data. Position jumps that exceed a geospatial plausibility threshold (e.g., maximum feasible displacement per unit time) may be discarded or flagged. Minor GPS jitter may be corrected by applying a light smoothing filter on positions or velocities while preserving true changes captured by curve logging. Consistency between computed speed ||v(tₗ)|| and recorded speed spd_{GPS}(tₗ) may be enforced within a tolerance band, triggering rescaling only when discrepancies exceed the tolerance.

As will be appreciated, the trip during for with the velocity vector, the longitudinal acceleration, and the lateral acceleration, may be identified using any suitable technique. For example, in some embodiments, a trip start may be identified based on vehicle movement (e.g., as derived from the geospatial data) after a period of non-movement and a trip end may be based on vehicle non-movement after a period of vehicle movement. The particular length of the periods may be any suitable length - e.g., 5 minutes, 10 minutes, 30 minutes, etc.

At operation 430 of the method 400, a trip subinterval comprising a non-zero speed event may be identified for each trip.

Ass used herein, the term "trip subinterval" refers to at least a portion of a trip that comprises the non-zero speed event - i.e., a period of any length of time during which the speed, or velocity, of the vehicle is non-zero. As indicated herein, the velocity vector, longitudinal acceleration may be associated with each trip subinterval, as well.

The trip subintervals may be identified using any suitable technique. In one example, the at least one processor may be operated to evaluate successive telematics data (e.g., geospatial data) to determine whether the reported or inferred speed exceeds a near-zero threshold (e.g., about 0 to about 2 km/h) over a sustained window, thereby mitigating transient noise and GPS jitter. If speed is missing or curve-logged, motion may alternatively be inferred from displacement per unit time exceeding a plausibility threshold or from a non-zero acceleration magnitude computed from consecutive velocity vectors. Upon detecting sustained motion, the at least one processor may be operated to designate the start of such motion as the start of a trip subinterval.

In that example, the processor may then be operated to extend the subinterval by appending consecutively reported telematics data that continues to satisfy motion criteria and for which longitudinal and lateral accelerations are validly computable - e.g., excluding timestamps where Δt equals zero or where velocity magnitude is ill-defined below a small threshold. If an observation fails the motion criteria or yields missing accelerations due to boundary conditions, the at least one processor may be operated to terminate the current subinterval and, if appropriate, identify a new one upon the next re-establishment of motion. To avoid trivial segments, the at least one processor may be operated to enforce minimum duration and/or minimum reporting count requirements (e.g., at least two telematics data reports) per subinterval depending on data frequency.

In some embodiments, brief stationary pauses within otherwise continuous driving (e.g., such as stop-and-go traffic) may be handled by operating the at least one processor to merge adjacent subintervals separated by gaps shorter than a merge threshold, thereby maintaining coherent motion segments while still respecting zero-speed exclusions for downstream processing. In such embodiments, subinterval boundaries may be aligned to the nearest observed timestamps, preserving the irregular time structure without interpolating to a regular grid. The segmentation logic may incorporate tolerance bands and rolling window checks across speed, displacement, and acceleration features to reduce spurious splits caused by measurement noise and curve logging. In fleet applications, the at least one processor may optionally be operated to corroborate motion state with auxiliary signals, such as ignition status or gear selection, when available, while retaining a geospatial-only implementation when such signals are absent.

At operation 440 of the method 400, an anomalous trip event may be identified for each trip subinterval.

As used herein, the term "trip event" refers to, and includes, any type of event observable during a trip such as, but not limited to, a movement event, an acceleration event, a turning event, an idling event, etc. An "anomalous trip event" refers to a trip event that is an outlier as compared to other, similar trip events. For example, an anomalous acceleration trip event may indicate a period of unusually increased magnitude of acceleration as compared to other acceleration trip events.

The anomalous trip event may be identified by operating the at least one processor to identify a plurality of trip events by applying to each trip subinterval a stochastic model and determine that at least one trip event of the plurality of trip events is anomalous based on the at least one trip event exceeding a predetermined threshold. The stochastic model may be any suitable stochastic model. For example, as described herein, the stochastic model may be a stochastic model that is capable of processing irregularly reported telematics data such as, but not limited to, a continuous-time hidden Markov model.

As will be appreciated, in the context of the present disclosure, a continuous-time hidden Markov model may be employed to characterize the evolution of a latent process that governs observed (i.e., reported) telematics signals. In general, and without being held to any particular theory, the continuous-time hidden Markov model assumes a system occupies one of a plurality of discrete latent states at any instant in time and transitions among the latent states according to time-homogeneous transition rates, thereby permitting state changes to occur at arbitrary, non-uniform times. Observations (e.g., velocity vectors, longitudinal acceleration, and lateral acceleration) are generated conditionally on the active latent state via state-dependent probability distributions. Unlike discrete-time formulations that require regular sampling, the continuous-time hidden Markov model natively incorporates the actual time gaps between successive observations and does not require interpolation to a fixed time grid. When fitted to telematics data, the continuous-time hidden Markov model enables inference of the most probable latent state sequence over time and facilitates identification of deviations from typical driving behavior, thereby supporting anomaly detection and trip-level risk assessment without reliance on labeled training data or regularly rereported telematics data.

In some embodiments, forecast pseudo-residuals may be implemented in conjunction with the continuous-time hidden Markov model to quantify a degree of deviation of observed telematics signals from behavior expected under the model given prior observations and actual inter-observation time gaps. As described herein, the continuous-time hidden Markov model specifies a latent process that transitions among discrete states according to time-homogeneous transition rates, thereby inducing state-transition probabilities over irregular intervals without requiring interpolation to a fixed time grid. Conditioned on state posteriors derived from the latent process and state-dependent emission distributions for observed telematics dimensions (e.g., velocity vector, longitudinal acceleration, lateral acceleration), a conditional cumulative distribution function of an upcoming observation may be obtained. A uniform forecast pseudo-residual is defined by evaluating the conditional cumulative distribution at the realized observation, and a corresponding normal forecast pseudo-residual is obtained via a monotone transformation to a standard normal scale. Under adequate model fit, the normal forecast pseudo-residuals are approximately standard normal; observations exhibiting a magnitude exceeding a predetermined threshold are flagged as outliers. Aggregation of flagged outliers across time and dimensions yields trip-level anomalousness metrics operable for driving risk assessment.

Thus, in some embodiments, the at least one processor is operable to identify the anomalous trip event by: determining, for each observation dimension of the continuous-time hidden Markov model, a plurality of forecast pseudo-residuals conditioned on prior observations under the continuous-time hidden Markov model; transforming the forecast pseudo-residuals to a normal scale; and identifying the anomalous trip event when a magnitude of a transformed pseudo-residual exceeds the predetermined threshold. It is noted that the predetermined threshold may be any suitable threshold for identifying outliers.

Further, in some embodiments, the stochastic model may comprise an individual-specific stochastic model for detecting anomalous trip events relative to a typical driving behavior of a specific driver. In such embodiments, the stochastic model comprises an individual-specific model trained on trip subintervals attributable to a single driver to learn that driver's typical, normal driving behavior. The individual-specific model may be implemented as a continuous-time hidden Markov model having an initial state distribution, a time-homogeneous transition rate matrix, and state-dependent emission distributions parameterized from the driver's historical telematics observations (e.g., velocity vectors, longitudinal acceleration, lateral acceleration) recorded at irregular or regular time intervals, as described herein. In such implementations, forecast pseudo-residuals may be conditioned on the individualized state posteriors, deviations are quantified relative to the driver's own baseline rather than to a population average, thereby improving sensitivity to idiosyncratic changes (e.g., emerging aggressive braking patterns, atypical cornering, harsh acceleration patterns, etc.) while reducing false positives associated with inter-driver heterogeneity. In some implementations, the individualized parameters are periodically updated using expectation-maximization to reflect evolving behavior, and anomaly thresholds may be held constant across drivers due to the statistical calibration provided by the residuals' approximately standard-normal distribution under adequate fit.

In other embodiments, the stochastic model may comprise a pooled stochastic model for detecting anomalous trip events relative to a typical driving behavior of a pool of drivers to capture population-level normal driving behaviors and enable cross-driver comparisons. The pooled model may likewise be implemented as a continuous-time hidden Markov model fitted to irregularly or regularly sampled trip subintervals aggregated across drivers, with shared transition-rate and emission parameters that summarize prevalent state dynamics and observation distributions. Forecast pseudo-residuals may be determined under the pooled model provide a common anomaly scale, permitting fair benchmarking of trips from different drivers and ranking of drivers or trips by outlier proportions, right-tail percentiles, or maximum anomalousness over specified horizons. In some implementations, the pooled model supports portfolio analytics, including classification of drivers with and without claims, identification of candidate accident-related trips across the fleet, and derivation of claim probability models using tail statistics of outlier proportions together with exposure measures (e.g., number of trips).

In further embodiments, hybrid approaches are employed in which an individual-specific stochastic model is used for within-driver anomaly detection and a pooled model is used for population-level normalization and comparison, thereby enabling both personalized feedback and fleet-wide risk management using a consistent, continuous-time, irregular-sampling framework.

The inventors surprisingly found that the use of forecast pseudo-residuals in conjunction with the continuous-time hidden Markov model may confers multiple technical advantages for assessing driving risk. In more detail, the continuous-time hidden Markov model natively incorporates actual inter-observation time gaps through time-homogeneous transition rates, thereby obviating interpolation to a fixed grid and preserving the behavioral fidelity of irregularly reported (e.g., curve-logged) telematics data while accommodating variable trip lengths and sampling irregularity. Conditioned on state posteriors and state-dependent emission distributions, forecast pseudo-residuals provide a statistically calibrated measure of deviation that accounts for the full observation history across dimensions (e.g., velocity vectors, longitudinal acceleration, lateral acceleration), enabling unsupervised anomaly detection without predefined event thresholds or labeled accident data. Transforming uniform pseudo-residuals to a normal scale yields approximately standard-normal residuals under adequate fit, facilitating consistent outlier flagging via a single magnitude threshold and reducing false positives attributable to sensor noise and GPS jitter. Aggregating flagged outliers across time and dimensions produces trip-level anomalousness metrics operable for various downstream operations such as dynamic risk scoring, supporting frequent updates, individualized models that learn a driver's typical behavior, and pooled models for population-level benchmarking and fair cross-driver comparisons. Collectively, these features enhance robustness, accuracy, and timeliness of risk assessment relative to aggregation-based methods and discrete-time approaches that assume regular sampling.

At operation 450 of the method 400, a trip risk score based at least in part on a proportion of anomalous trips may be determined.

As used herein, the term "trip risk score" refers to a representation (e.g., alphabetical or numerical) of how safe, or how risky, a driver operates a vehicle based on their observed driving behaviours.

The trip risk score may be determined based at least in part on a proportion of anomalous trips. In more detail, the trip risk score may be determined based on the proportion of anomalous trip events relative to non-anomalous trip events. For example, a higher proportion of anomalous trip events may indicate dangerous driving, which may then be reflected in the trip risk score.

In some embodiments, the determining of the trip risk score is based at least in part on a proportion of flagged outliers across a velocity dimension, a longitudinal acceleration dimension, a lateral acceleration dimension, or a combination thereof. In such embodiments, the trip risk score may be based at least in part of the proportion of different types of anomalous trip events - e.g., velocity, longitudinal acceleration, lateral acceleration, etc. For example, an anomalous velocity event may be considered by some to be more or less dangerous than an anomalous acceleration event and may therefore affect a trip risk score differently therefrom. By considering different types of anomalous trip events, trip risk score may be more accurately adjusted or determined to reflect a driver's actual risk during a trip.

Further, it may in some cases be useful to weight one or more aspects of the determining of the trip risk score so that the trip risk score is "exposure-adjusted", normalized for trip subintervals of different lengths, etc. For example, in some embodiments, the determining of the trip risk score comprises operating the at least one processor to weight the proportion of anomalous trip events by a duration of the trip subinterval, by a number of events of the plurality of trip events, or a combination thereof.

The particular technique for determining the trip risk score is not particularly limited. For example, as particular proportion, or range of proportions, of anomalous trip events may be translated into a letter grade (e.g., A, B, C, etc.) or a numerical value that represents the overall riskiness of the trip.

The trip risk score may then be used to inform, for example, insurance premiums, driver coaching, and the like. The trip risk score may be continually adjusted and/or updated as a particular driver completes more trips.

In view of the foregoing, the systems and methods of the present disclosure may in some embodiments directly model irregular, trip-level telematics time series using a stochastic framework (e.g., continuous-time hidden Markov) and forecast pseudo-residuals to detect anomalous driving without predefined thresholds or labeled accident data. By deriving physics-based velocity and acceleration features, segmenting trips into non-zero-speed intervals, and calibrating outliers on a common statistical scale, the systems and methods of the present disclosure may in some embodiments enable accurate, timely, and exposure-adjusted trip risk scoring. These capabilities improve robustness to curve-logged data, accommodate variable trip lengths, and support both individualized driver assessment and pooled population benchmarking, thereby enhancing fairness in insurance pricing, fleet safety management, and actionable driver feedback.

In the present disclosure, all terms referred to in singular form are meant to encompass plural forms of the same. Likewise, all terms referred to in plural form are meant to encompass singular forms of the same. Unless defined otherwise, all technical and scientific terms used herein have the same meaning as commonly understood by one of ordinary skill in the art to which this disclosure pertains.

As used herein, the term "about" refers to an approximately +/-10 % variation from a given value. It is to be understood that such a variation is always included in any given value provided herein, whether or not it is specifically referred to.

It should be understood that the compositions and methods are described in terms of "comprising," "containing," or "including" various components or steps, the compositions and methods can also "consist essentially of or "consist of the various components and steps. Moreover, the indefinite articles "a" or "an," as used in the claims, are defined herein to mean one or more than one of the element that it introduces.

Throughout this specification and the appended claims, infinitive verb forms are often used, such as "to operate" or "to couple". Unless context dictates otherwise, such infinitive verb forms are used in an open and inclusive manner, such as "to at least operate" or "to at least couple".

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, whenever a numerical range with a lower limit and an upper limit is disclosed, any number and any included range falling within the range are specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values even if not explicitly recited. Thus, every point or individual value may serve as its own lower or upper limit combined with any other point or individual value or any other lower or upper limit, to recite a range not explicitly recited.

The Drawings are not necessarily to scale and may be illustrated by phantom lines, diagrammatic representations, and fragmentary views. In certain instances, details that are not necessary for an understanding of the exemplary embodiments or that render other details difficult to perceive may have been omitted.

The specification includes various implementations in the form of block diagrams, schematics, and flowcharts. A person of skill in the art will appreciate that any function or operation within such block diagrams, schematics, and flowcharts can be implemented by a wide range of hardware, software, firmware, or combination thereof. As non-limiting examples, the various embodiments herein can be implemented in one or more of: application-specific integrated circuits (ASICs), standard integrated circuits (ICs), programmable logic devices (PLDs), field-programmable gate arrays (FPGAs), computer programs executed by any number of computers or processors, programs executed by one or more control units or processor units, firmware, or any combination thereof.

The disclosure includes descriptions of several processors. Said processors can be implemented as any hardware capable of processing data, such as application-specific integrated circuits (ASICs), standard integrated circuits (ICs), programmable logic devices (PLDs), field-programmable gate arrays (FPGAs), logic circuits, or any other appropriate hardware. The disclosure also includes descriptions of several non-transitory processor-readable storage mediums. Said non-transitory processor-readable storage mediums can be implemented as any hardware capable of storing data, such as magnetic drives, flash drives, RAM, or any other appropriate data storage hardware. Further, mention of data or information being stored at a device generally refers to the data information being stored at a non-transitory processor-readable storage medium of said device.

Therefore, the present disclosure is well adapted to attain the ends and advantages mentioned as well as those that are inherent therein. The particular embodiments disclosed above are illustrative only, as the present disclosure may be modified and practiced in different but equivalent manners apparent to those skilled in the art having the benefit of the teachings herein. Although individual embodiments are dis-cussed, the disclosure covers all combinations of all those embodiments. Furthermore, no limitations are intended to the details of construction or design herein shown, other than as described in the claims below. Also, the terms in the claims have their plain, ordinary meaning unless otherwise explicitly and clearly defined by the patentee. It is therefore evident that the particular illustrative embodiments disclosed above may be altered or modified and all such variations are considered within the scope and spirit of the present disclosure. If there is any conflict in the usages of a word or term in this specification and one or more patent(s) or other documents that may be incorporated herein by reference, the definitions that are consistent with this specification should be adopted.

Many obvious variations of the embodiments set out herein will suggest themselves to those skilled in the art in light of the present disclosure. Such obvious variations are within the full intended scope of the appended claims.

## Claims

1. A system for assessing driving risk, the system comprising:
at least one data storage operable to store telematics data, the telematics data originating from a plurality of telematics devices installed in a plurality of vehicles and comprising at least geospatial data; and
at least one processor in communication with the at least one data storage, the at least one processor operable to:
determine, using the geospatial data, a velocity vector, a longitudinal acceleration, and a lateral acceleration for at least one vehicle of the plurality of vehicles during a trip;
identify, for each trip, at least one trip subinterval, each trip subinterval comprising a non-zero speed event having the velocity vector, the longitudinal acceleration, and the lateral acceleration associated therewith;
identify, for each trip subinterval, an anomalous trip event by:
identifying a plurality of trip events by applying to each trip subinterval a stochastic model, and
determining that at least one trip event of the plurality of trip events is anomalous based the at least one trip event exceeding a predetermined threshold;
and
determine a trip risk score based at least in part on a proportion of anomalous trip events.

2. The system of claim 1, wherein the geospatial data comprises irregularly reported geospatial data.

3. The system of claim 1 or 2, wherein the at least one processor is operable to determine the longitudinal acceleration and the lateral acceleration based on a plurality of consecutive velocity vectors.

4. The system of any one of claims 1 to 3, wherein the stochastic model comprises a continuous-time hidden Markov model.

5. The system of claim 4, wherein the at least one processor is operable to identify the anomalous trip event by:
determining, for each observation dimension of the continuous-time hidden Markov model, a plurality of forecast pseudo-residuals conditioned on prior observations under the continuous-time hidden Markov model;
transforming the forecast pseudo-residuals to a normal scale; and
identifying the anomalous trip event when a magnitude of a transformed pseudo-residual exceeds the predetermined threshold.

6. The system of any one of claims 1 to 5, wherein the at least one processor is operable to determine the trip risk score based at least in part on a proportion of flagged outliers across a velocity dimension, a longitudinal acceleration dimension, a lateral acceleration dimension, or a combination thereof.

7. The system of any one of claims 1 to 6, wherein the at least one processor is operable to determine the trip risk score by weighting the proportion of anomalous trip events by a duration of the trip subinterval, by a number of events of the plurality of trip events, or a combination thereof.

8. A method for assessing driving risk, the method comprising operating at least one processor to:
receive telematics data originating from a plurality of telematics devices installed in a plurality of vehicles, the telematics data comprising at least geospatial data;
determine, using the geospatial data, a velocity vector, a longitudinal acceleration, and a lateral acceleration for at least one vehicle of the plurality of vehicles during a trip;
identify, for each trip, at least one trip subinterval, each trip subinterval comprising a non-zero speed event having the velocity vector, the longitudinal acceleration, and the lateral acceleration associated therewith;
identify, for each trip subinterval, an anomalous trip event by:
identifying a plurality of trip events by applying to each trip subinterval a stochastic model, and
determining that at least one trip event of the plurality of trip events is anomalous based on the at least one trip event exceeding a predetermined threshold; and determining a trip risk score based at least in part on a proportion of anomalous trip events.

9. The method of claim 8, wherein the geospatial data comprises irregularly reported geospatial data.

10. The method of claim 8 or 9, wherein the determining of the longitudinal acceleration and the lateral acceleration is based on a plurality of consecutive velocity vectors.

11. The method of any one of claims 8 to 10, wherein the stochastic model comprises a continuous-time hidden Markov model.

12. The method of claim 11, wherein the identifying of the anomalous trip event comprises operating the at least one processor to:
determine, for each observation dimension of the continuous-time hidden Markov model, a plurality of forecast pseudo-residuals conditioned on prior observations under the continuous-time hidden Markov model;
transform the forecast pseudo-residuals to a normal scale; and
identify the anomalous trip event when a magnitude of a transformed pseudo-residual exceeds the predetermined threshold.

13. The method of any one of claims 8 to 12, wherein the determining of the trip risk score is based at least in part on a proportion of flagged outliers across a velocity dimension, a longitudinal acceleration dimension, a lateral acceleration dimension, or a combination thereof.

14. The method of any one of claims 8 to 13, wherein the determining of the trip risk score comprises operating the at least one processor to weight the proportion of anomalous trip events by a duration of the trip subinterval, by a number of events of the plurality of trip events, or a combination thereof.

15. A non-transitory computer-readable medium having instructions stored thereon executable by at least one processor to implement a method for assessing driving risk, the method comprising operating at least one processor to:
receive telematics data originating from a plurality of telematics devices installed in a plurality of vehicles, the telematics data comprising at least geospatial data;
determine, using the geospatial data, a velocity vector, a longitudinal acceleration, and a lateral acceleration for at least one vehicle of the plurality of vehicles during a trip;
identify, for each trip, at least one trip subinterval, each trip subinterval comprising a non-zero speed event having the velocity vector, the longitudinal acceleration, and the lateral acceleration associated therewith;
identify, for each trip subinterval, an anomalous trip event by:
identifying a plurality of trip events by applying to each trip subinterval a stochastic model, and
determining that at least one trip event of the plurality of trip events is anomalous based on the at least one trip event exceeding a predetermined threshold; and determining a trip risk score based at least in part on a proportion of anomalous trip events.
